# EUROPEAN PATENT APPLICATION

(11) **EP 4 556 799 A1**
(43) Date of publication of application: **21.05.2025**
(21) Application number: 24213091.2
(22) Date of filing: 14.11.2024
(51) Int. Cl.: F24D 3/18, F24H 1/43, F24H 4/02, F24H 8/00, F28D 21/00

(54) **HEAT EXCHANGE CELL FOR CONDENSING BOILERS AND COMBINED HEATING SYSTEM**

(30) Priority: 16.11.2023 IT 202300024252
(71) Applicant: Immergas S.p.A., 42041 Brescello (Reggio Emilia) (IT)
(72) Inventor: BENECCHI, Alberto, 42041 BRESCELLO (REGGIO NELL'EMILIA) (IT); TOMASI, Roberta, 10121 TORINO (IT); ZAMBRELLI, Cristian, 43124 PARMA (IT)
(74) Representative: Bacchini, Davide

(57) **Abstract**

Heat exchange cell (1) for condensing boilers, defining a containment volume (2), comprising a burner (3), at least one conduit (6) used for circulation of a heat transfer fluid, and an evaporator (7) of a refrigerant circuit. The burner (3) is configured to carry out combustion so as to produce combustion fumes (4). The heat transfer fluid is configured to exchange heat with the burner (3) and/or the fumes. The evaporator (7) is configured to lower an ambient temperature inside the containment volume (2), in particular of the fumes.

## Description

The present invention relates to a heat exchange cell for condensing boilers and a combined heating system of a primary water circuit.

In particular, the heating system comprises a condensing boiler and a heat pump. Such a combination is often referred to as a "hybrid system". Centralised heating systems which simultaneously use a heat pump and a boiler are currently known. In particular, the boiler is of the instantaneous condensation type.

In these systems, a primary water circuit is heated first by the heat pump and then by the boiler. In particular, the heat pump comprises a refrigerant fluid circuit, which receives heat from the ambient air and transfers it to the water. The pre-heated water then reaches the boiler, where it is further heated by heat exchange with the combustion products generated by a burner.

In the sector of condensing boilers for domestic use, a heat exchange cell is present inside which the transfer of heat occurs between a burner and a heat transfer fluid, usually water, used by the boiler for its primary formation of heating the environments.

The heat exchange cells used until now are mainly of three types.

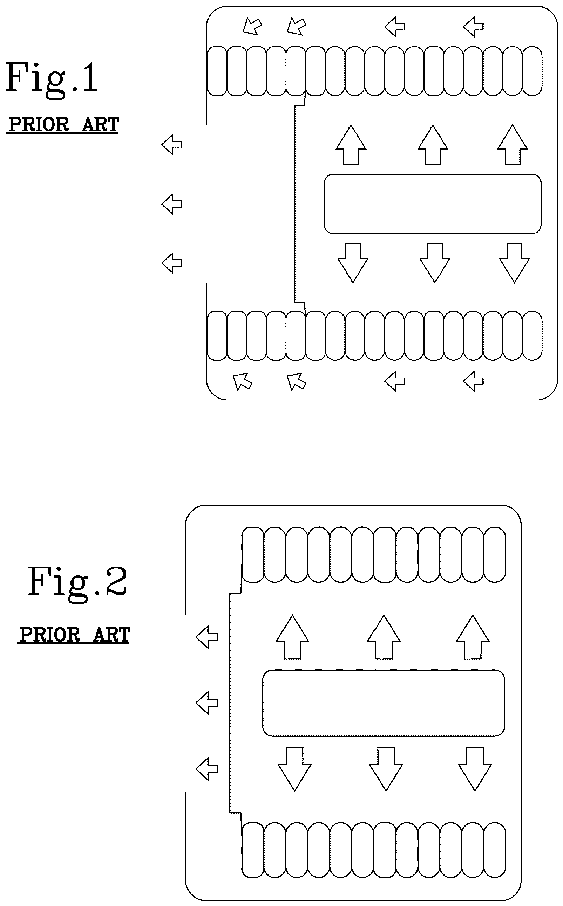

Inside the first type of heat exchange cell (Figure 1), the combustion fumes produced are collected inside a condensation chamber in which a further heat exchange occurs between fumes and heat transfer fluid, which leads to condensation of the vapours present in the fumes.

The second type of heat exchange cell (Figure 2) comprises a single block where the heat exchange between the water and the combustion part and the fumes occurs, without there being a dividing septum between the latter.

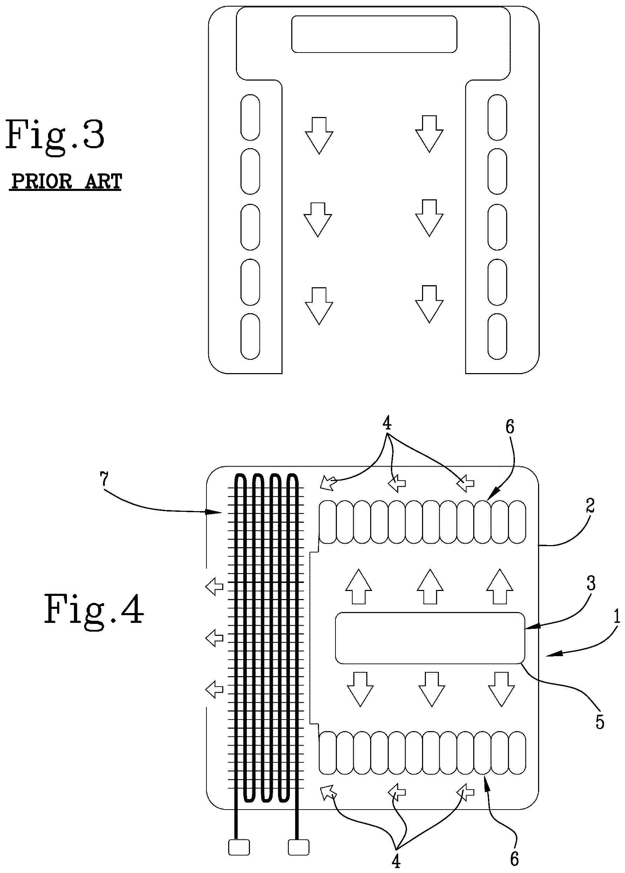

The third type of heat exchange cell (Figure 3) comprises a metal body in which passages for the water are obtained and, inside the metal body, the combustion chamber with passage of the fumes and the relative condensation is obtained.

The main drawback of the solutions just described lies in dispersion of the residual heat of the fumes.

Furthermore, the presence of a refrigerant fluid circuit inside a combined heating system, in certain cases, is responsible for phenomena such as frosting and the formation of ice inside the heat pump.

These phenomena make it necessary to switch off the combined system or to reverse the system cycle, with the consequent loss of heat and extension of the times.

In this context, the technical task underpinning the present invention is to provide a heat exchange cell for condensing boilers and a combined heating system of a primary water circuit which overcome the drawbacks of the prior art.

In particular, an object of the present invention is to provide a heat exchange cell for condensing boilers and a combined heating system of a primary water circuit, in which the heat of the combustion fumes is recovered with high efficiency.

Another object of the present invention is to provide a heat exchange cell for condensing boilers and a combined heating system of a primary water circuit capable of exploiting the heat of the fumes in order to avoid the formation of ice and any frosting phenomena.

The stated technical task and the specified objects are substantially achieved by a heat exchange cell for condensing boilers and a combined heating system of a primary water circuit.

The heat exchange cell for condensing boilers defines a containment volume defining the main structure.

The heat exchange cell further comprises a burner configured to carry out combustion so as to produce combustion fumes.

The burner preferably comprises a chamber isolated from a surrounding environment in which combustion takes place in total safety.

The exchange cell further comprises at least one conduit configured to create a circulation of a heat transfer fluid.

The heat transfer fluid, preferably comprising water, is configured to exchange heat with the burner and/or the combustion fumes.

The heat exchange fluid is also used for condensation of the vapours present in the combustion fumes.

The heat exchange cell further comprises an evaporator of a refrigerant circuit at least partially inserted within the containment volume.

The evaporator is configured to lower an ambient temperature inside the containment volume so as to increase a temperature difference between the combustion fumes and the environment.

Advantageously, thanks to the evaporator, it is possible to drop well below the ambient temperature and therefore to create an ideal environment for the heat exchange given by the large difference in temperature inside the heat exchange cell.

Additional features and advantages of the present invention will become more apparent from the indicative, and hence non-limiting, description of a preferred but not exclusive embodiment of a heat exchange cell for condensing boilers and a combined heating system of a primary water circuit.

Such a description will be set out below with reference to the accompanying drawings, which are provided solely for illustrative and therefore non-limiting purposes, in which:
- Figures 1-3 are schematic representations of front sections of embodiments present in the prior art;
- Figures 4-7 are schematic representations of front sections of possible embodiments of a heat exchange cell according to the present invention. With reference to the figures, number 1 indicates a heat exchange cell for condensing boilers which, for an easier description, will be indicated below as cell 1.

The cell 1 defines an external containment volume 2 with a structure function for the condensing boiler.

The cell 1 comprises a burner 3 configured to carry out combustion so as to produce combustion fumes 4.

The burner 3 comprises a chamber 5 isolated from a surrounding environment in which combustion takes place.

The isolated chamber 5 guarantees the combustion process inside the burner 3 in total safety.

The cell 1 further comprises at least one conduit 6 configured to create a circulation of a heat transfer fluid.

According to a possible embodiment, at least part of the conduit 6 is responsible for condensation of the combustion fumes 4.

Preferably, the heat transfer fluid used inside the conduit 6 is in the form of water.

The heat transfer fluid is configured to exchange heat with the burner 3 and/or the combustion fumes 4.

The heat transfer fluid also has the task of causing condensation of the vapours present in the combustion fumes 4.

The cell 1 further comprises an evaporator 7 of a refrigerant circuit at least partially inserted within the containment volume 2.

The evaporator 7 is configured to lower an ambient temperature inside the containment volume 2 so as to increase a temperature difference between the combustion fumes 4 and the environment.

The evaporator 7 may totally or partially replace the part of the conduit 6 used for condensation, depending on the recovery need of the cell 1.

In other words, as depicted schematically in Figure 4, the evaporator 7, in order to obtain the condensation, may replace totally the part of conduit 6 containing the heat transfer fluid that is responsible for condensation of the combustion fumes 4.

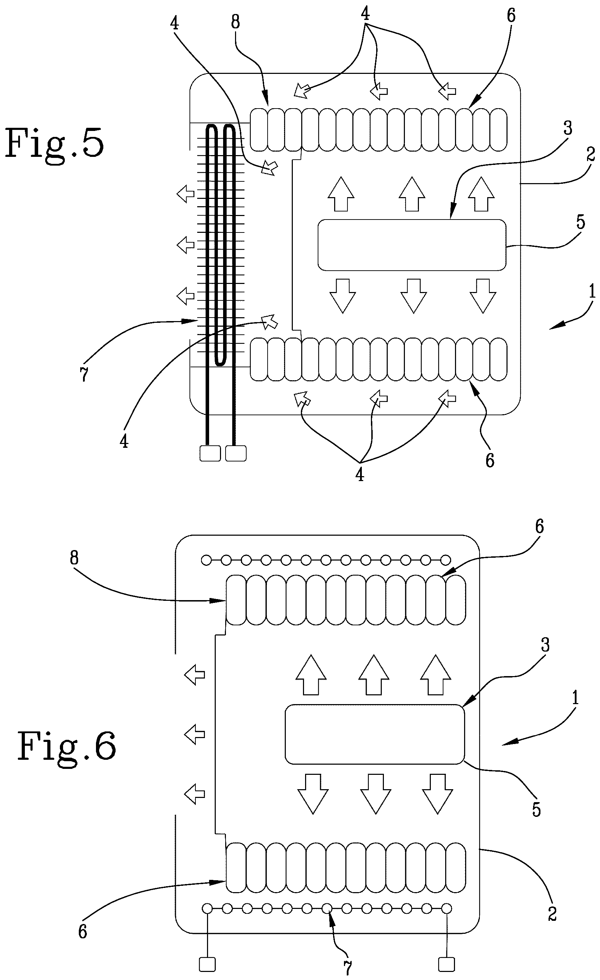

Alternatively, as depicted schematically in Figures 5 and 6, the evaporator 7, in order to guarantee a further recovery of the residual heat of the combustion fumes 4, may replace only partially the part of conduit 6 containing the heat transfer fluid that is responsible for condensation of the combustion fumes 4, thus working in synergy with the latter.

A common objective of the various embodiments of the cell 1 described in the present invention is to obtain the maximum recovery on the heat of the residual combustion fumes 4 from combustion of the burner 3. Advantageously, given that on the evaporator 7 of a refrigerant circuit it is possible to drop well below the ambient temperature difference, an ideal environment is created inside the cell 1 for the heat exchange, given the large temperature difference.

Furthermore, the cell 1 allows a possible frosting phase of the evaporator 7 to be managed, by decreasing the flow of refrigerant and exploiting the heat of the combustion fumes 4.

Advantageously, by avoiding the phenomenon of frosting or the formation of ice on the evaporator 7, the cell 1 does not need interruptions during its functioning or reversals of the system cycle, which would lead to heat dispersion.

According to a possible embodiment of the cell 1, at least a part of the evaporator 7 is arranged transversely with respect to the extension of the conduit 6 containing the heat transfer fluid.

Alternatively, or in combination with what has just been described, the cell 1 may have at least a part of the evaporator 7 arranged parallel to the extension of the conduit 6 containing the heat transfer fluid.

According to a possible embodiment, the cell 1 comprises a condensation chamber 8 inside which the combustion fumes 4 and the heat transfer fluid exchange heat with each other.

Preferably, the condensation chamber 8 is located adjacent to the extension of the conduit 6 containing the heat transfer fluid.

Even more preferably, part of the conduit 6 comprises in an end part thereof of the extension the condensation chamber 8 itself.

Preferentially, where the condensation chamber 8 is present, at least a part of the evaporator 7 is located in it.

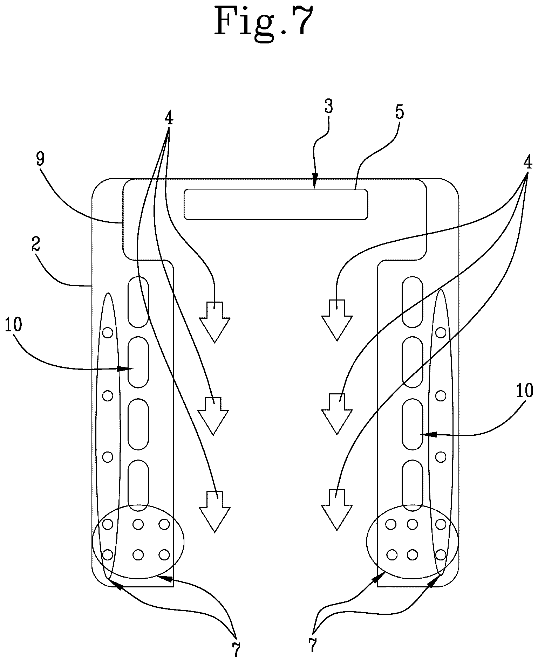

According to another possible embodiment, depicted schematically in Figure 7, the cell 1 comprises a coating body 9 in metallic material.

The coating body 9 is external with respect to the burner 3 and internal with respect to the containment volume 2 of the cell 1.

In order to allow the passage of heat, in this latter described configuration of the cell 1, one or more passages 10 for the heat transfer fluid are obtained on the coating body 9.

Preferably, the cell 1 comprises a coating body 9 made at least partially of aluminium.

Even more preferably, the cell 1 comprises a coating body 9 made totally of aluminium.

According to a possible embodiment, where the cell 1 comprises a coating body 9, the evaporator 7 is interposed in the coating body 9 in metallic material.

In other words, the evaporator 7 may be placed in any spatial arrangement, as long as it is at least partially contained in the containment body 9.

According to a possible preferred embodiment of the cell 1, the evaporator 7 is interposed between the conduit 6 containing the heat transfer fluid and the containment volume 2.

In other words, the evaporator 7 is at least partially arranged between one or more passages 10 of the coating volume 9 and the containment body 2. Alternatively, or in combination with what has just been described, the cell 1 may have at least a part of the evaporator 7 arranged adjacent to the extension of the conduit 6 containing the heat transfer fluid.

In other words, the evaporator 7 is at least partially arranged adjacent to one or more passages 10 of the coating body 9.

The present invention also provides a combined heating system of a primary water circuit comprising a condensing boiler comprising a heat exchange cell 1 and a heat pump.

The cell 1 comprises an outlet for combustion fumes 4 connected at least partially to the heat pump.

In other words, the two machines are associated with each other so as to form a combined system.

The primary water circuit extends partially through the combined heating system so that the water therein is heated first by the heat pump and then by the boiler, to then be sent to a heating system.

The heat pump comprises at least a part of the refrigerant circuit in which the refrigerant fluid flows and part of the heat exchanger.

The heat exchanger, according to this configuration, is crossed by the refrigerant circuit.

During the path across the heat exchanger, the refrigerant fluid receives heat passing from a liquid state to a gaseous state.

In other words, said circuit passes through the heat exchanger, in which the refrigerant fluid evaporates, passing from the liquid state to the gaseous state.

Preferably, the heat exchanger is realised in the form of an evaporator 7.

From such evaporator 7, the refrigerant fluid is sent from a compressor to a further heat exchanger, in which the refrigerant fluid condenses passing from the gaseous state to the liquid state, transferring heat to the water returning from the heating system.

In summary, the compressor has the function of circulating the refrigerant fluid in the circuit, sucking it from the evaporator 7 in the form of gas and compressing it so as to convey it to the condenser, at high pressure. Any type of compressor which involves volumetric compression can be used. The refrigerant fluid circuit also has a lamination valve (adiabatic), which determines the necessary and sufficient pressure drop to maintain the pressure of the refrigerant fluid at the desired values at the evaporator 7 and the condenser.

Advantageously, the cell 1 can therefore be used inside a system comprising a condensing boiler and a heat pump in order to combine the power of the two machines in question, and consequently guaranteeing an improvement in heating of the environment.

Advantageously, the present invention provides a heat exchange cell 1 for condensing boilers and a combined heating system of a primary water circuit which are capable of overcoming the drawbacks which have emerged from the prior art.

Advantageously, the present invention allows a radical improvement in heat recovery coming, mainly, from the combustion fumes 4.

Advantageously, the present invention provides a heat exchange cell 1 for condensing boilers and a combined heating system of a primary water circuit capable of exploiting the heat of the combustion fumes 4 in order to avoid the formation of ice and any frosting phenomena on the evaporator 7.

## Claims

1. A heat exchange cell (1) for condensing boilers, defining a containment volume (2), comprising:
- a burner (3) configured to carry out combustion so as to produce combustion fumes (4) and comprising a chamber (5) isolated from a surrounding environment in which combustion takes place;
- at least one conduit (6) configured to create a circulation of a heat transfer fluid configured to exchange heat with said burner (3) and/or said fumes and lead to a condensation of the vapours present in said combustion fumes (4);
**characterized in that** it comprises an evaporator (7) of a refrigerant circuit at least partially inserted within said containment volume (2) and configured to lower an ambient temperature inside said containment volume (2) so as to increase a temperature difference between said combustion fumes (4) and said environment.

2. The heat exchange cell (1) according to the preceding claim, comprising a condensation chamber (8) inside which said combustion fumes (4) and said heat transfer fluid exchange heat with each other.

3. The heat exchange cell (1) according to claim 2, wherein said evaporator (7) is located in said condensation chamber (8).

4. The heat exchange cell (1) according to one or more of claims 1 to 3, wherein at least a part of said evaporator (7) is arranged transversely with respect to the extension of said conduit (6) containing said heat transfer fluid.

5. The heat exchange cell (1) according to one or more of claims 1 to 4, wherein at least a part of said evaporator (7) is arranged parallel to the extension of said conduit (6) containing said heat transfer fluid.

6. The heat exchange cell (1) according to one or more of the preceding claims, comprising a coating body (9) in metallic material, external with respect to said burner (3) and internal with respect to said containment volume (2), in which one or more passages (10) for said heat transfer fluid are obtained.

7. The heat exchange cell (1) according to claim 6, wherein said coating body (9) in metallic material is at least partially made of aluminium.

8. The heat exchange cell (1) according to claim 6 or 7, wherein said evaporator (7) is interposed in said coating body (9) of metallic material.

9. The heat exchange cell (1) according to one or more of claims 6 to 8, wherein said evaporator (7) is interposed between said conduit (6) containing said heat transfer fluid and said containment volume (2).

10. The heat exchange cell (1) according to one or more of claims 6 to 9, wherein said evaporator (7) is located adjacent to the extension of said conduit (6) containing heat transfer fluid.

11. A combined heating system for heating a primary water circuit comprising a condensing boiler comprising a heat exchange cell (1), according to one or more of claims 1 to 10, and a heat pump comprising at least a part of a refrigerant circuit in which a refrigerant fluid flows and a heat exchanger crossed by said refrigerant circuit in which the refrigerant fluid receives heat passing from a liquid state to a gaseous state; said heat exchange cell (1) having a combustion fume outlet (4) connected to said heat pump.

12. The combined heating system according to claim 11, wherein said heat exchanger is realized in the form of said evaporator (7).
